# EUROPEAN PATENT APPLICATION

(11) **EP 1 975 786 A1**
(43) Date of publication of application: **01.10.2008**
(21) Application number: 07105202.1
(22) Date of filing: 29.03.2007
(51) Int. Cl.: G06F 9/445

(54) **Method for installing a printer driver on an end user's computer**

(71) Applicant: Ricoh Company, Ltd., Yokohama-shi, Kanagawa 222-8530 (JP)
(72) Inventor: Fukaya, Kazuyuki, FR-92143, Clamart Cedex (FR)
(74) Representative: Hutter, Jacobus Johannes

(57) **Abstract**

SITUATION: When working with remote devices said devices have to be located/discovered first and may require driver installation.
PROBLEM: How to make sure that a user selects the right device in a network of devices.
SOLUTION:
The device is extended with a key/button enabling a user to start an installation procedure from the device.
The user starts the installation procedure by pressing said key.
The device outputs to the user a unique device identifier, UID (on paper in case of a printer or on an electronic carrier).
The device generates a package with installation information which is stored in the device or stored on a network server together with the device identifier ID. This package acts as a beacon in the network.
The user subsequently uses the outputted UID as an input on the user's computer to search and connect to the right device.
The computer and the device are connected and a driver is installed after testing if UID = ID.
The package / beacon has a limited life span, expiration time, hence it is up-to-date.

## Description

### Field of the invention

The present invention relates to a method for installing a driver of a target device on an end user's computer, wherein a network couples the end user's computer and target device. The invention further relates to a peripheral device arranged for cooperation with an end user's computer, wherein a network couples the end user's computer and peripheral device.

### Prior art

Nowadays, peripheral devices, such as a printer or copier can be networked to a plurality of end users. The end users can send/receive documents to/from the peripheral device from/to their desktop computer to be processed. One awkward and often time consuming task associated with the arrival and installation of such a new device is that of installing the requisite driver software. Such drivers are known in the art and are software applications which make a peripheral device visible to the users thereby allowing communication there between and making the newly installed peripheral device usable via the desktop computer.

US5,692,111 describes a process in which a user adds a new server based printer of a local network in the windows registry of the workstation by browsing the local network and selecting the server based printer that the user wants to add. Upon selecting the server based printer, printer configuration files and print driver files for the selected printer are retrieved from the network and are installed on the user's workstation, after which an instance of the server based printer is created in the user's windows registry.

EP1372060A2 describes another way to install a printer of a local network on a desktop computer for peer-to-peer communication over a local network between the workstation and the printer. A user accesses a website of printers that can be added to the workstation using a browser on the workstation, wherein an html page is downloaded to the browser to display a listing of printers that can be added. The html page includes a hyperlink for each printer, wherein the hyperlink includes identification information of the printer. To add a printer the user simply clicks on the hyperlink for the printer that the user wants to add to the workstation.

EP 1376347A2 describes a software-installing method. A network administrator produces and provides a template of a scenario which describes procedures for installing the software on a computer and an installation database. A scenario which is specific to the computer is generated automatically by incorporating parameters with respect to the computer in the template by searching an installation database. A recording medium such as, for example, a CD-ROM, in which an installation program is described, is supplied to the computer. For each printing device a specific recording medium has to be provided.

The installation methods described above, start on the end user's computer. The user has to select the desired printer from a list or has to insert a record carrier with an installation package for the desired printer. Whether the end user installs the right printer depends on the correctness of the information of the printer available on the network or stored on the record carrier. Consider the following example: a user would like to install printer "PR_13452" on his computer. The printer is located on the third floor. First, he could go to the printer and identify the printer, for example by reading a label fixed on the printer with the printer name. The user could write down on paper or keep in mind the printer name. On his computer, he searches for the corresponding printer and installs the printer. However, if the printer name has been changed recently or he could not remember the printer name, he could probably not find the desired printer or select another printer. If the printer has been replaced by another type of printer recently and the information on the network has not been updated, the user will install an incorrect printer driver. These kinds of problems will increase when the time between the identification of the printer to install and the moment of installation increases.

### Summary of the invention

The present invention seeks to provide an improved method for installing a driver of a target device on an end user's computer, wherein a network couples the end user's computer and target device.

According to the present invention, the method comprises:
- receiving an install command by the target device supplied by an end user;
- generating an unique identification and an associated data package in response to said install command, wherein the data package comprises an identifier having a relation with the unique identification;
- recording by means of the target device the unique identification on a data carrier;
- storing the data package on a predefined location remote from the end user's computer;
- supplying the unique identification written on the data carrier to the end user's computer; and,
- installing a driver of the target device on the end user's computer in dependence on the unique identification on the data carrier and the identifier.

The invention is based on the recognition that in the methods of installing of device drivers described in the documents referred to above, the installation of the drivers is started by the end user on the end user's computer and that the device does not have an active roll during the installation of the drivers. Consider the example of installing a printer. The end user has to start installation software on his computer. Before he can install the printer, he has to know a reference of the printer. He can input this reference or to search for said reference in a list of printing devices that he could install on his computer. After selecting or inputting the reference, the installation software installs the drivers and default settings on the end user's computer. Finally, the end user has to perform a test job on the printer, to verify whether he has used the right reference. Therefore, the installation of the target device fully depends on correct actions by the user and/or up-to-date installation information available on the network. Therefore, after installation the user has to go physically to the target device to know whether he has installed the correct drivers. In the known installation programs, there is no physical check whether the user installs the drivers of the intended target device before the user installs the drivers.

According to the invention, the installation procedure begins at the target device. Therefore, the end user has to go physically to the target device. The target device generates two types of data, a unique identification and a data package including an identifier having a relation with the unique identifier respectively after the user has entered an install command. The first type of data is for example a generated piece of paper with a unique number and installation instructions to be performed by the end user on the end user's computer. The first type of data has to be handled by the end user and taken to the end user's computer. In this way, the end user initiates an installation procedure on the end user's computer by supplying the unique identification to the installation program running on the end user's computer. The identifier included in the data package is used by the installation software to match with the unique identifier supplied by the end user to the installation program. If there is a match, the installation of the target device will be performed on the end user's computer. The matching assures that the correct target device is installed.
Furthermore, the end user does not need to know any configuration details of the target device, as all the necessary installation information will be generated automatically after inputting the installation command. For example, the user does not have to provide any network and routing information to connect the target device to his computer. This makes that an end user can easily install the target device without aid of specific knowledge.

In a further embodiment of the invention, the method further comprises deleting the data package from the predefined location after installation of the driver on the end user's computer. This feature limits the use of the unique identification and data package to only one time. An advantage is that the end user will not keep the data carrier with the unique identification for a second time installation or hand over the data carrier to a colleague. In the event the data carrier is used a second time after a some time, the target device could have been replaced by another type, resulting in installation of incorrect drivers, the target device could have been upgrade, resulting in installation of an incomplete set of drivers and the target device could have been replaced and moved to another location, resulting in installing a device that was not intended. Similar problems, can occur when the data carrier is forwarded to a colleague.

In an embodiment of the invention, the method further comprises generating an expiration code; and,
- inserting the expiration code in the data package,
wherein the action installing is performed in dependence of the expiration code.

These features limit the period between entering the install command on the target device and the actual installation on the end user's computer. The chance of a problem described above will increase when the period increases. Therefore, this feature reduces the possibility that the end user performs an incorrect installation of drivers.

In an embodiment of the invention, the data carrier is a sheet of paper and the action of writing comprises printing the unique identification on the sheet of paper. This feature allows providing a very easy way of installing a target device. A sheet of paper has the advantage that it could describe all the actions to be performed on the end user's computer to install the drivers of the target device.

In an embodiment of the invention, the data carrier is an electronic data carrier. This feature is very suitable for a target device, which does not have printing facilities, for example a scanning device. The target device should have an interface to store the data on the data carrier and the end user's computer should have an interface to read the data from the data carrier. Some examples of a data carrier are a USB memory stick, a RFID memory device and a memory device with a Bluetooth interface.

The invention further seeks to provide a peripheral device arranged for cooperation with an end user's computer, wherein a network couples the end user's computer and peripheral device, the peripheral device comprising:
- an input unit for entering an install command by the end user;
- a processor readable storage medium; and
- a processor in communication with said input device and said processor readable storage medium;
- an interface unit to enable the connection with the network;
- an output unit for recording data on a data carrier;
said processor readable storage medium storing code to program said processor to initiate to perform in response to the install command a method comprising the actions:
- generating an unique identification and an associated data package;
- storing the data package on a predefined location remote from the end user's computer, and
- instructing the output unit to record the unique identification on the data carrier.

The present invention further seeks to provide a computer program comprising instructions that when loaded on a computer arrangement supports performing the method according to the invention. The computer program product enables to program very easily a target device, peripheral device and/or computer to execute the method according to the invention.

The present invention further seeks to provide a processor readable medium carrying a computer program that, when loaded on a computer arrangement, supports performing the method according to the invention. Examples of appropriate processor readable storage media include a floppy disk, hard disk, CD ROM, DVD, memory IC, etc.

### Short description of drawings

The present invention will be discussed in more detail below, using a number of exemplary embodiments, with reference to the attached drawings, in which
Fig. 1 illustrates a structure of a network system to which a software driver installing method according to the present invention is applied;
Fig. 2 shows a first embodiment of system components and corresponding data flows;
Fig. 3 is a block diagram of the system components corresponding to the first embodiment;
Fig.4 shows a second embodiment of system components and corresponding data flows;
Fig. 5 is a block diagram of the system components corresponding to the second embodiment;
Fig. 6 is a block diagram of the system components corresponding to a third embodiment;
Fig. 7 is a block diagram of an exemplar peripheral device for implementing the method according to the invention;
Fig. 8 illustrates the method of installing a peripheral device on an end user's computer according to the invention.

### Detailed description of exemplary embodiments

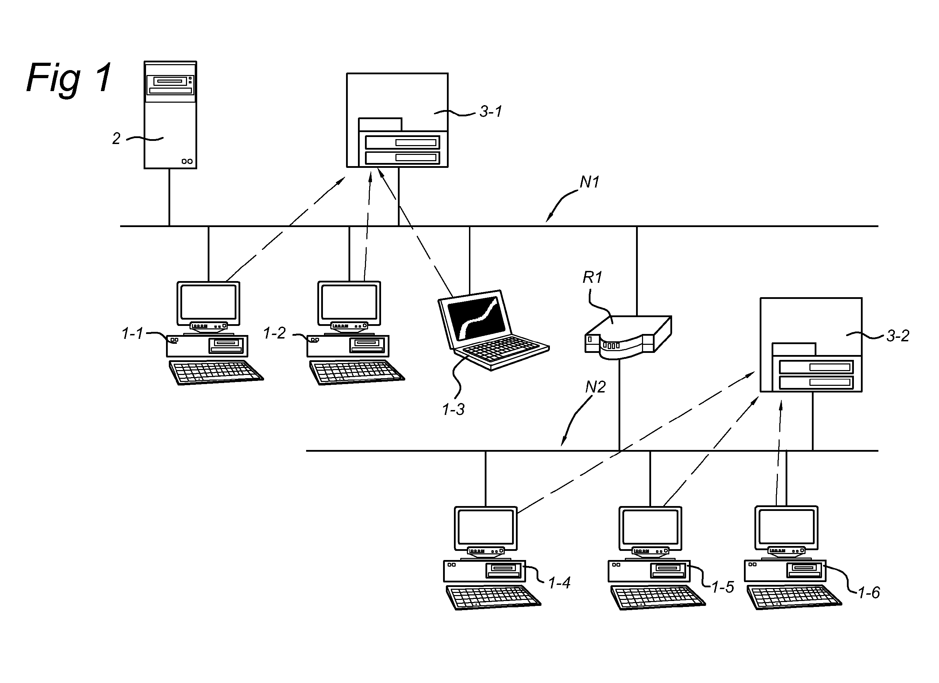

Figure 1 illustrates a structure of a network system to which a method for installing a driver of a target device on an end user's computer is applied, wherein a network couples the end user's computer and target device.

The network shown in figure 1 is a large-scale network, which is formed by connecting a network N1 and a network N2 to each other through a router R1. End user's computers 1-1, 1-2 and 1-3, a server 2 and a peripheral device 3-1, in the form of a printer, are connected to the network N1. End user's computers 1-4, 1-5 and 1-6 and a peripheral device 3-2 are connected to the network N2. The end user's computers 1-1 through 1-6 could be various kinds of computers such as desktop computers and laptop computers. The peripheral devices 3-1 and 3-2 could be printers for performing printing operations based on outputs generated by the end user's computers. The peripheral devices 3-1 and 3-2 could be any other device that could be used by a multiple of computers such as fax machines, scanners or multi function printers (MFP).

The network N1 and N2 could be a wired network, a wireless network, or a combination of wired and wireless network. The network N1 could be present on a first floor of an office building and network N2 could be present on a second floor of an office building

It should be noted that, in the following description, the end user's computers 1-1 through 1-6 may be referred to as an end user's computer 1 as a generic designation, and the peripheral devices 3-1 and 3-2 may be referred to as a peripheral device 3 as a generic designation.

A peripheral device 3 performs a printing operation requested by an end user's computer 1 according to the following procedure.

When an application program, which runs on the end user's computer 1, issues a print instruction, a device driver, which is most appropriate for the peripheral device 3, which has to perform the printing, produces print data. After the print data is produced, data transfer software enables the end user's computer to transfer the print data to the designated peripheral devices 3. A printing result is output from the designated peripheral device 3.

The print data can be transferred directly to a peripheral device. If the network comprises a server 2 configured to perform a printer server function, the print data can be transferred via the server 2.

A characteristic of a large-scale network is that end user's computers can be coupled to anyone of the peripheral devices in the network. However, only an end user's computer 1 will use a few of the peripheral devices 3. In an office building, a user will use the peripheral devices nearest to the end user's computer 1 to generate a printout. As an example, the end user's computers 1-1, 1-2 and 1-3 and peripheral device 3-1 are located at the same floor, and the end user's computers 1-4, 1-5 and 1-6 and peripheral device 3-2 are located at another floor. Due to the physical distance, users of the end user's computer 1 at one floor will normally not use the peripheral device 3 at the other floor. Therefore, in figure 1, end user's computers 1-1, 1-2 and 1-3 should be arranged to use only peripheral device 3-1 and end user's computers 1-4, 1-5 and 1-6 should be arranged to use only peripheral device 3-2.

However, to enable an end user's computer 1 to generate print data, an appropriate device driver of a peripheral device 3 has to be installed on the end user's computer 1.

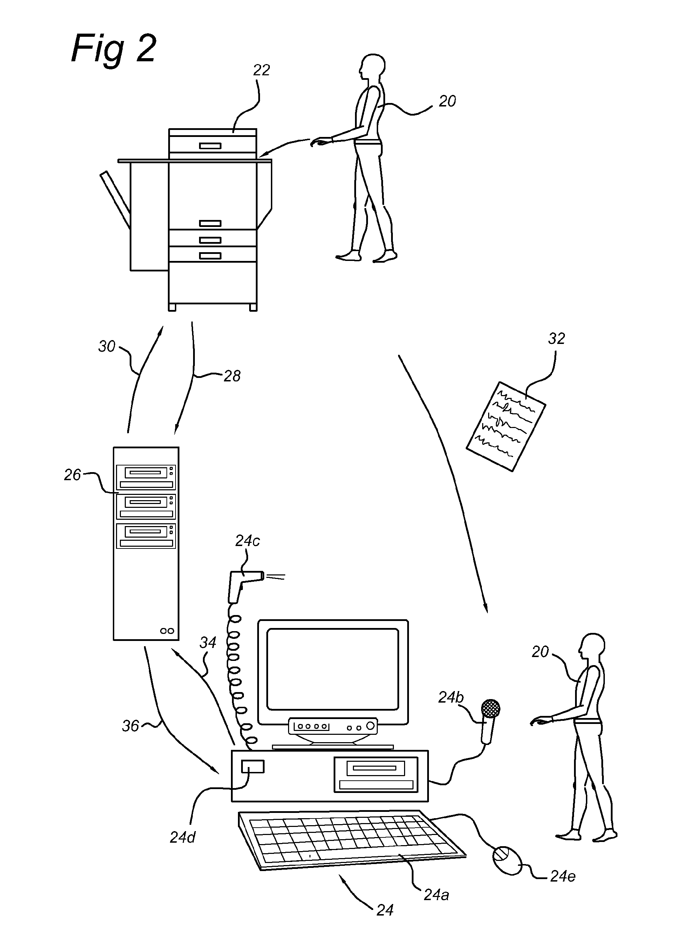

A description will now be given, with reference to figure 2, which illustrates a first embodiment of a process for installing the software necessary for using the peripheral device on an end user's computer 1. This software includes a printer driver, data transfer software and corresponding settings.

The process for installing software starts with walking by a user 20 to a peripheral device 22 he would like to use on his end user's computer 24. The peripheral device 22 comprises a dedicated user operable button or voice label to generate an install command on the peripheral device 22. The peripheral device 22 sends a request 28 to a server 26 in response to the install command generated after the user has operated that button or voice label. The request 28 could be sent by means of a browser running on the peripheral device 22. A software application running on a processor of the server 26 generates a unique identification and an associated data package in response to the request 28. The associated data package comprises at least information about the peripheral device 22 generating the request and matching data to enable a unique match between the unique identification and the associated data package. For example, the matching data could be identical to the unique identification or could have a predetermined unique relationship with the unique identification. An encoding or encryption algorithm could define the unique relationship. The associated data package could further include all the necessary device drivers to be installed on the end user's computer 24.

The software application program running on the server 26 sends a data package 30 comprising the unique identification 30 to the peripheral device 22. The peripheral device 22 stores the unique identification on a data carrier 32. In the event the peripheral device 22 is a printer, the data carrier could be a piece of paper. The printer prints the unique identification on the piece of paper. A data carrier 32 in the form of a piece of paper enables the user 20 to supply the unique identification to the end user's computer 24 for example by means of a key board 24a or mouse 24e. However, if a voice recognition application is running on the end user's computer, the user could supply the unique identification by means of his voice. In this case, the end user's computer 24 comprises a microphone 24a. The peripheral device 22 could also be arranged to print the unique identification in the form of a barcode on the piece of paper 32. In this case, a barcode reader 24c or any other scanning device, which is coupled to the end user's computer 24, could be used to supply the unique identification to the end user's computer 24.

The peripheral device 22 could comprise an interface device, for example a USB-port. In that case, for example a USB memory stick could be used to supply the unique identification to the end user's computer 24. The peripheral device 22 is arranged to write the unique identification on an electronic data carrier. The end user's computer 24 comprises a USB-port 24d to connect the USB memory stick to the end user's computer 24. An application is running on the end user's computer 24 for reading the unique identification from the electronic data carrier. Other examples of an interface device are a Bluetooth interface or RFID interface, which uses a memory device with a Bluetooth interface or a RFID interface respectively as data carrier. It is to be understood that the invention is not limited to these examples of data carriers for carrying the unique identification. Other current and future data carriers are contemplated to be within the scope of the present invention.

After the peripheral device 22 has printed the unique identification on a data carrier 32, the user 20 takes the data carrier and goes to his end user's computer 24.
The user 20 starts an installation application running on the end user's computer 24 to continue the installation of the drivers of the peripheral device 22. In an embodiment, the installation application is an internet browser, which by means of a URL (universal resource locator) enables accessing the software running on the server 26.

In another embodiment, the installation application is a dedicated software program arranged for communication with the server 26. Then the end user supplies the unique identification to the installation application by means of one of the examples given above. The installation application running on the end user's computer 24 makes a connection with the software application running on the server 26. The unique identification is supplied to the software application in a data package 34. The software application running on the server 26 checks whether an associated data package belonging to the unique identification is present in a memory cooperating with a processor of the server 26. The memory could be an internal or external hard disk or any other suitable storage medium cooperating with the processor. If an associated data package is present, the application running on the server sends an installation package 36, which comprises content of the associated data package, to the end user's computer 24. The installation package 36 comprises the drivers and predefined settings of the peripheral device 22. Some examples of predefined settings for a printer are paper size, page layout, print style, binding location.

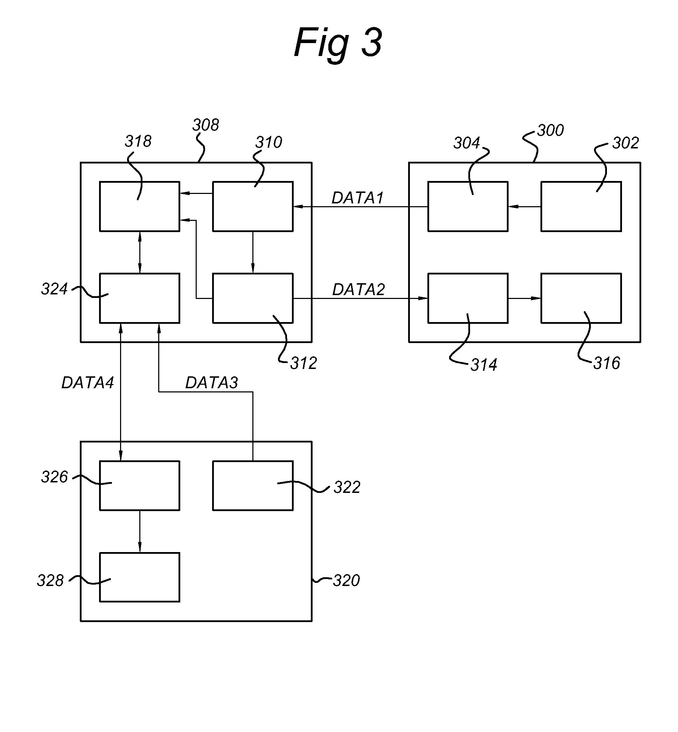

Figure 3 is a block diagram of the system components corresponding to the first embodiment. The peripheral device 300, e.g. a printer, comprises an input device 302 arranged for receiving an instruction for generating the install command. In response to the install command device 304 generates a request and sends the request DATA1 to a server 308. The request DATA1 includes at least information for identifying the peripheral device 300. A receiving device 310 receives the request DATA1 and instructs an identification generator 312 to generate the unique identification. Furthermore, the identification generator generates matching data. An associated data package-preparing device 318 receives at least the information identifying the peripheral device 300 from the receiving device 310 and the matching data from the identification generator 312. Subsequently, the associated data package-preparing device 318 generates an associated data package and stores the data at a defined location on a storage medium connected the server308. The associated data package includes at least the information identifying the peripheral device, for example the network address and the device type, and the matching data. The matching data enables software to make a unique match between the unique identification and the matching an associated data package. In an exemplary embodiment, the matching data is equivalent to the unique identification.

After generating the unique identification, the identification generator 312 sends a data package DATA2 to a receiving device 314 of the peripheral device 300. Data package DATA2 includes information, which enables the user to install the drivers corresponding to the peripheral device 300 on his computer 320. The receiving device 314 forwards the information in data package DATA2 to an output device 316 of the peripheral device. The output device 316 stores information, which includes at least the unique identification on a data carrier (not shown) as described above. The information on the data carrier could further include an installation manual to provide a user easily access to the installation procedures. The information could comprise an URL, which could be the unique identification.

The user provides the information stored on the data carrier to an installation request application 322 running on his computer 320. The installation request application 322 sends a data package DATA3 to a handling device 324 of the server. Data package DATA3 includes at least the unique identification. The handling device 324 could be a software application running on the server 308. The handling device 324 searches on the storage medium connected to the server 308 for an associated data package including matching data that matches the unique identification. The handling device 324 uses the associated data to submit an installation package DATA4 to the end user's computer 320. DATA4 includes at least predefined settings or setup information corresponding to the peripheral device 300. A receiving device 326 of the end user's computer receives DATA4. The end user's computer 320 could be arranged to check whether the device drivers of the peripheral device are already available in a storage device of the end user's computer. If the information provided by the end user already includes information about the necessary drivers, this check could be performed by the installation request application 322. In that case, the installation request application could request the handling device to send an installation package DATA4 including only the predefined settings or a package DATA4 including all necessary information to perform an installation on the computer 320. If the information provided by the end user does not included information about the necessary drivers, the handling device 324 could first sent information about the drivers to be installed and the predefined settings. The receiving device 326 uses this information to check whether the necessary drivers are already present on the end user's computer 320. If the drivers are not present, the receiving device 326 requests the handling device 324 to submit the appropriate drivers via an additional installation package DATA4. The receiving device 326 supplies the installation package DATA4 to a driver-installing device 328. The driver-installing device 328 processes the information in the installation package DATA4 and installs the drivers of the peripheral device 300 on the end user's computer 320.

On an end user's computer 320, an operating system, e.g. Windows 2000, UNIX, Mac, XP, Linux, is running. Each operating system requires specific device drivers for using a peripheral device. Therefore, in an embodiment an associated data package comprises the drivers for the respective operating systems. In another embodiment, an associated data package comprises linkage information to the locations on a storage medium where the respective drivers for an operating system can be found. In an embodiment installation package DATA4 comprises the drivers for all the respective operating systems and the driver installing device 328 extracts only the applicable drivers from the installation package DATA4 for installation on the end user's computer 320.

In another embodiment, the installation request application 322 sends a data package DATA3 that includes further information regarding the operating system running on the end user's computer 320. The handling device 324 generates an installation package DATA4 that comprises only the drivers for the corresponding operating systems and transmits said installation package to the end user's computer 320 for installation on the end user's computer. An advantage of these embodiments is that the end user's does not need any specific knowledge about the operating system running on the end user's computer.

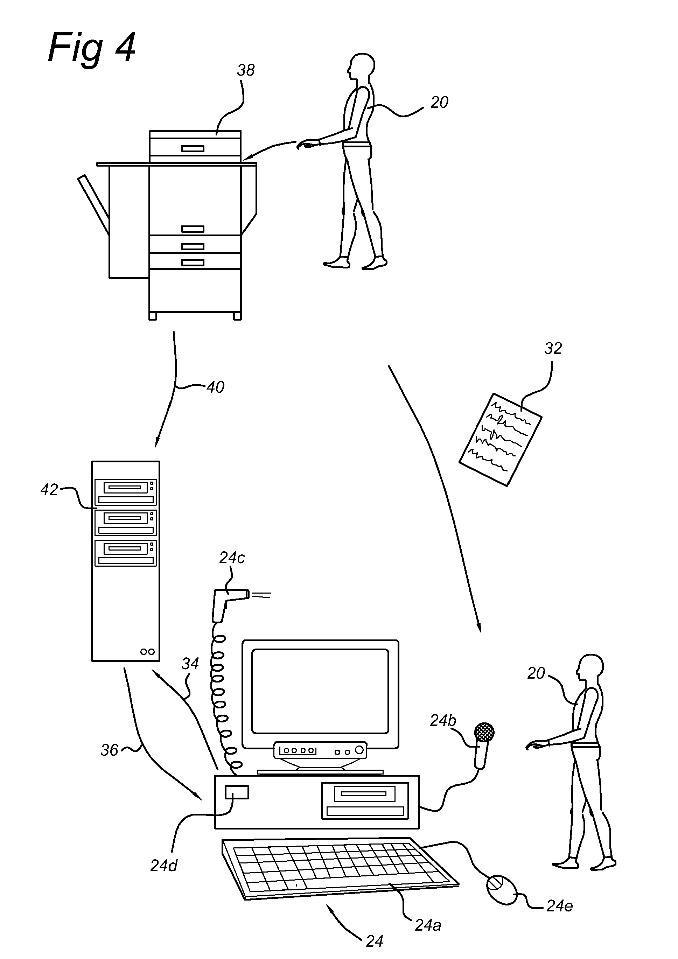

Figure 4 illustrates a second embodiment of a process for installing to an end user's computer the software necessary for using the peripheral device. The second embodiment differs from the first embodiment illustrated in figure 2 in that it comprises an alternative peripheral device 38. The alternative peripheral device 38 generates the unique identification and the associated data package. The peripheral device 38 prints the unique identification on the data carrier 32 in a similar way as disclosed above. An arrow with reference 40 indicates the transfer of the associated data package to a server 42.

In an embodiment, the associated data package generated by the peripheral device 38 includes the unique identification or a parameter having a relation with the unique identification, and data representative of the peripheral device 38. Some examples of data representative of the peripheral device 38 are the serial number of the peripheral device 38, the name of the peripheral device 38 in the network, the IP-address of the peripheral device 38, or any other unique characteristic of the peripheral device 38. The application running on the server 42 uses the data representative of the peripheral device 38 to retrieve the appropriate drivers and predefined settings of the peripheral device 38 to generate the installation package 36 to be sent to the end user's computer.

In another embodiment, the associated data package generated by the peripheral device 38 includes the unique identification or a parameter having a relation with the unique identification, the drivers and predefined settings of the peripheral device 38. In this embodiment, the application running on the server 42 retrieves the associated data package and stores the content of the associated data package in a memory. After the end user's computer 24 has sent a data package 34 comprising the unique identification to the server 26, the software application running on the server 26 checks whether an associated data package belonging to the unique identification is present in the memory cooperating with the processor of the server 26. If an associated data package is present, the software application running on the server 26 sends an installation package 36, which comprises content of the associated data package, to the end user's computer 24 to enable the installation of the peripheral device 38 on the end user's computer 24.

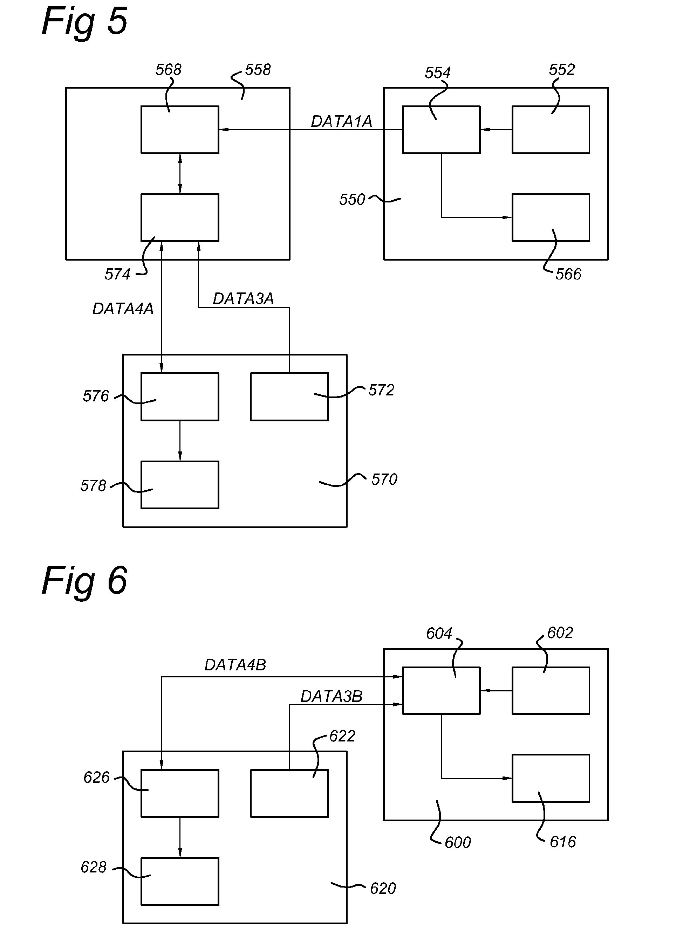

Figure 5 is a block diagram of the system components corresponding to the second embodiment shown in figure 4. The peripheral device 550, e.g. a printer, comprises an input device 552 arranged for receiving an instruction for generating the install command. In response to the install command, device 554 generates a unique identification and matching data and sends a data package DATA1A to a server 558. The data package DATA1A includes at least the matching data and information for identifying the peripheral device 550. An associated data package-preparing device 568 receives the data package DATA1A. Subsequently, the associated data package-preparing device 568 generates an associated data package and stores the associated data package at a defined location on a storage medium connected the server 558. An associated data package includes at least the information identifying the peripheral device, for example the network address and the device type, and the matching data. The matching data enables software to make a unique match between the unique identification supplied by the user to an end user's computer 570 and matching data include in an associated data package. In an exemplary embodiment, the matching data is equivalent to the unique identification.

Device 554 sends information including at least the unique identification to an output device 566 of the peripheral device. The output device 566 stores information, which includes at least the unique identification on a data carrier (not shown) as described above. The information on the data carrier could further include an installation manual to provide a user easily access to the installation procedures. The information could comprise an URL, which could be the unique identification.

The user provides information stored on the data carrier to an installation request application 572 running on his computer 570. The installation request application 572 sends a data package DATA3A to a handling device 574 of the server. Data package DATA3A includes at least the unique identification. The handling device 574 could be a software application running on the server 558. The handling device 574 searches on the storage medium connected to the server 558 for an associated data package including matching data that matches the unique identification. The handling device 574 uses the data included in the associated data package that matches to submit an installation package DATA4A to the end user's computer 570. DATA4A includes at least predefined settings or setup information corresponding to the peripheral device 550. Data package DATA3 could comprise information regarding the operating system running on the end user's computer. In that case, the handling device 574 could be arranged to generate an installation package DATA4 that includes only the drivers for the said operating system. A receiving device 576 of the end user's computer receives DATA4A. The end user's computer 570 could be arranged to check whether the device drivers of the peripheral device are already available in a storage device of the end user's computer 570. If the information provided by the end user already includes information about the necessary drivers, this check could be performed by the installation request application 572. In that case, the installation request application 572 could request the handling device 574 to sent an installation package DATA4A including only the predefined settings or a package including all necessary information to perform an installation on the end user's computer 570. If the information provided by the end user does not include information about the necessary drivers, the handling device 574 could first sent information about the drivers to be installed and the predefined settings. The receiving device 576 uses this information to check whether the necessary drivers are already present on the end user's computer 570. If the drivers are not present, the receiving device 576 requests the handling device 574 to submit the appropriate drivers via an additional installation package DATA4A. The receiving device 576 supplies the installation package DATA4A to a driver-installing device 578. The driver-installing device 578 processes the information in the installation package DATA4A and installs the drivers of the peripheral device 550 on the end user's computer 570.

Figure 6 is a block diagram of the system components corresponding to a third embodiment. This embodiment differs from the second embodiment in that the server functionality of the second embodiment is integrated in the peripheral device 600. Device 604 performs the integrated functionality of device 554, associated data package preparing device 568 and handling device 574, respectively, described in the second embodiment. The peripheral device 600, e.g. a printer, comprises an input device 602 arranged for receiving an instruction for generating the install command. In response to the install command, device 604 generates a unique identification and matching data. Furthermore, device 604 generates an associated data package and stores the associated data package at a defined location on a storage medium connected the peripheral device 600. The associated data package includes at least the matching data.

Device 604 is further arranged to send information including at least the unique identification to an output device 616 of the peripheral device 600. The output device 616, e.g. a printing unit, stores information, which includes at least the unique identification on a data carrier (not shown), e.g. sheet of paper, as described above. The information on the data carrier could further include an installation manual to provide a user easily access to the installation procedures. In an exemplar embodiment, the information includes an URL to access browser software running on the peripheral device and the unique identification to select the corresponding associated data package. In another exemplar embodiment the URL is a link to storage location of the corresponding associated data package.

The user provides the information stored on the data carrier to an installation request application 622 running on his computer 620. The installation request application 622 sends a data package DATA3B to device 604 of the peripheral device 600. Data package DATA3A includes at least the unique identification. Device 604 could be a software application running on the peripheral device 600. Device 604 searches on the storage medium connected to the peripheral device 600 for an associated data package including matching data that matches the unique identification. Device 604 uses the data in the associated data package to submit an installation package DATA4B to the end user's computer 620. DATA4B includes at least predefined settings or setup information corresponding to the peripheral device 600. A receiving device 626 of the end user's computer receives DATA4B. The end user's computer 620 could be arranged to check whether the device drivers of the peripheral device are already available in a storage device of the end user's computer 620. If the information provided by the end user already includes information about the necessary drivers, this check could be performed by the installation request application 622. In that case, the installation request application 572 could request the handling device 574 to sent an installation package DATA4B including only the predefined settings or an installation package DATA4B including all necessary information to perform an installation on the end user's computer 620. If the information provided by the end user does not included information about the necessary drivers, device 604 could first sent information about the drivers to be installed together with predefined settings. The receiving device 626 uses this information to check whether the necessary drivers are already present on the end user's computer 620. If the drivers are not present, the receiving device 626 requests device 604 to submit the appropriate drivers via an additional installation package DATA4B. The receiving device 626 supplies the additional installation package DATA4B to a driver-installing device 628. The driver-installing device 628 processes the information in the installation package DATA4B and installs the drivers of the peripheral device 600 on the end user's computer 620.

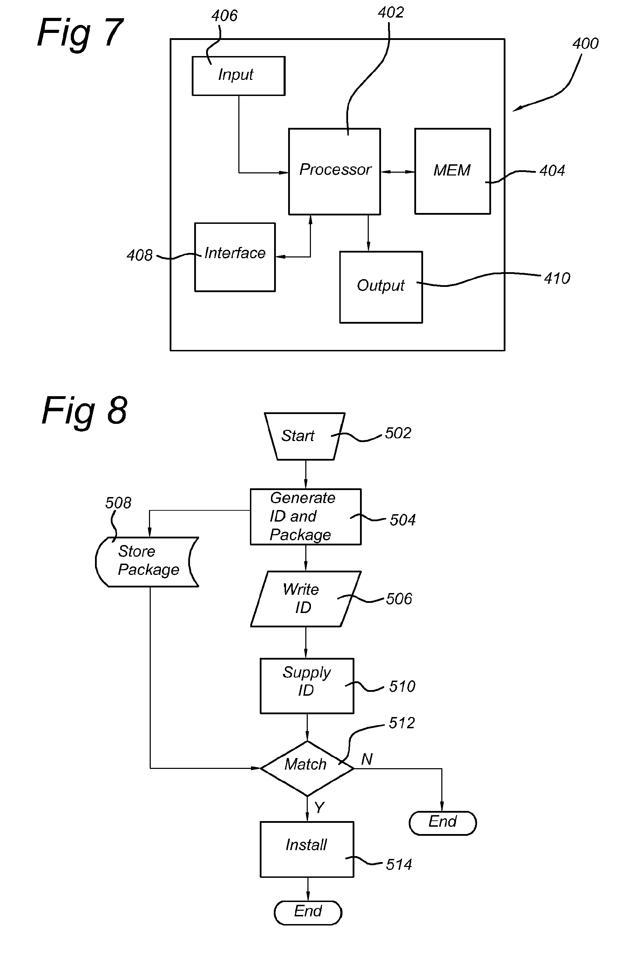

Figure 7 is a block diagram of an exemplar peripheral device 400 for implementing the method according to the invention. The peripheral device 400 comprises a processor 402 arranged for controlling the peripheral device 400. A memory 404 is coupled to the processor for cooperating with the processor 402. The memory 404 could be any processor readable storage medium, for example RAM, DRAM, SRAM, EPROM, FLASH memory. The memory 404 stores program code to program the processor. The memory 404 could further be used to store intermediate results, for example scanning data if the peripheral device 400 included scanning functionality, print data if the peripheral device 400 included printing functionality, facsimile data if the peripheral device includes facsimile functionality or any other data that has to be temporarily buffered for further processing. The peripheral device 400 further comprises an input device 400 for entering commands to control the peripheral device 400. Embodiments of an input device 406 could be a touch screen, a keyboard or voice controlled input. According to the invention, the input device comprises a special key, key combination or voice command to generate an install command. Furthermore, the processor 402 is in communication with an interface unit 408. The interface unit 408 could be a network card, e.g. a TCPIP-network card or Wireless-network card. The interface unit 408 enables the processor 402 to communicate with other network devices, such as the end user's computers and servers. The peripheral device further comprises an output unit 410. The processor 402 communicates with the output unit 410 to write data on a removable data carrier. Some examples of a data carrier are a piece of paper, a USB memory stick and a RFID card, and others as observed above.

In response to the install command generated by the input device 406, the program code running on the processor 402 initiates to perform a method comprising the following actions: generating an unique identification and an associated data package; storing the data package on a predefined location in the network, which location is remote from the end user's computer, coupled to the peripheral device 400, and instructing the writing unit 410 to write the unique identification on a data carrier.

In an embodiment, the program code enables the peripheral device 400 to communicate via the interface device 408 with a server, e.g. server 26. Via the interface device 408, the processor sends a request to the server to generate the unique identification and associated data package. In response to the request, the server sends the unique identification to the peripheral device 400 for writing on the data carrier, and stores the associated data package on the predefined location remote from the end user's computer.

In another embodiment, the program code is arranged to generate both the unique identification and associated data package, and to send the associated data package via the interface device 408 to the predefined location in the network remote from the end user's computer.

In yet another embodiment, the program code is arrange to perform at least the actions of device 604 described above.

Fig. 5 illustrates a flow graph of the method of installing a peripheral device on an end user's computer according to the invention. The method of installing starts with action 502 of entering the install command on the peripheral device to enable to install the peripheral device drivers and default settings on the end user's computer. The end user could enter the command by pressing a dedicated key of the peripheral device, pressing a key for a predefined period for example 5 seconds, a predefined key combination or predefined key sequence. After entering the install command, a process 504 starts to generate a unique identification and an associated data package. The associated data package comprises a parameter, which has a unique relation with the unique identification. The parameter could be similar to the unique identification or derived by an encoding or encrypting algorithm from the unique identification. Block 506 represents the writing of the unique identification on a data carrier. Embodiments of a data carrier have been described above. Block 508 represents the storage of the associated data package at a predefined location in the network, for example on a dedicated network server arranged with software for supporting the installation of peripheral device on an end user's computer.

In an embodiment, process 504 is fully running on the peripheral device. The peripheral device generates both the unique identification and the associated data package. Furthermore, the peripheral device communicates with a network server to enable the storage of the associated data package at a predefined location in the network.

In another embodiment, process 504 is partially running on the peripheral device and a network server. The peripheral device sends a request to the network server to provide the unique identification and to generate and store the associated data package. The network server sends the unique identification back to the peripheral device and stores the associated data package at the predefined location in the network remote from the end user's computer. Together with the unique identification, the peripheral device sends information comprising a characteristic to enable the network server to identify uniquely the peripheral device in the network. The information enables the network server to collect the software drivers and default settings to enable installation of the peripheral device on the end user's computer. In an embodiment, the peripheral device is arranged to provide the network server with all the software drivers and default settings to enable installation of the peripheral device drivers and default settings on the end user's computer. Preferably, the network server stores the software drivers and default setting in the associated data package.

Block 510 represents the physical transfer of the data carrier carrying the unique identification from the peripheral device to the end user's computer by the end user and the supply of the unique identification to an installation software program. The installation software could be running on the end user's computer, a network server or partially on the end user's computer and network server. Examples of the supply of the unique identification have been given above.

After the end user has supplied the unique identification to the installation software, the installation software searches for an associated data package having a parameter that matches the unique identification. Block 512 indicates this process. Block 514 describes the remaining actions to finalize the installation of the drivers on the end user's computer. The server sends an installation package comprising content of the associated data package that matches the unique identification to the end user's computer. The installation package preferably includes default settings of the peripheral device. The end user's computer installs, which corresponds to block 514, the drivers and default settings of the peripheral device after receiving the associated data package corresponding to the operating system running on the end user's computer..

Further, the server will delete the associated data package from the predefined location in the network remote from the end user's computer after the peripheral device is successfully installed at the end user's computer. The deletion of the associated data package assures that the unique identification could be used only once.

Normally, an end user installs the drivers of a peripheral device when he needs to use the peripheral device for the first time. The method according to the invention assures that the end user installs the right peripheral device on his computer. First, the end user has to walk to the desired peripheral device, which prints the unique identification on the data carrier. Secondly, the end user supplies the unique identification to the installation software at the end user's computer to enable the installation of said peripheral device. Normally, the end user performs both actions within a short time. This assures the end user that the desired peripheral device drivers will be installed as he has generated the unique identification himself by entering the install command at few moments before. By deleting the associated data package, the end user cannot use the unique identification on the data carrier a second time. If the unique identification could be used a second time, the end user could have forgotten which peripheral device corresponds to the unique identification written on the data carrier. This increases the possibility that the end user mistakenly installs the drivers of a peripheral device on his computer. Furthermore, if the end user who generates the data carrier hands the unique identification over to another person, said other person has to rely on the person who generates the unique identification that the installation software will install the desired peripheral device drivers and default setting. Only, by sending a task to the peripheral device after installation of the peripheral device, he could verify that the desired peripheral device is installed. The method according to the invention makes it very reliable and simple to install the drivers and default settings of a peripheral device on an end user's computer. By means of the invention, the physical interaction between the end user and the peripheral device determines that the correct device drivers and default settings will be installed.

The associated data package could further comprise an expiration code. The installation software uses the expiration code to verify whether the time between the generation of the unique identification and the actual installation of the peripheral device on the end user's computer is within a predetermined period. If the end user uses the unique identification after said predetermined period, he could already have forgotten to which peripheral device the unique identifier belongs. Furthermore, if no expiration code is used, the peripheral device could be moved or replaced by a peripheral device with other properties. In this way, the expiration code further decreases the chance that an end user will erroneously install the drivers of a peripheral device on the computer.

It should be noted that the expiration code could be integrated in the unique identifier. This enables the installation software to report the end user immediately that the unique identifier is invalid and that the user has to obtain a new unique identification. Furthermore, a software program running on the server could use the expiration code to delete an associated data package from the predefined location in the network after expiration of the expiration code. This assures that an associated data packages is kept at the predefined location for a period defined be the expiration code.

It should be noted that the software program running on the server could be running on a peripheral device. In that case, the information stored on the data carrier and provided by the user to the end user's computer comprises information to identify the network location of the peripheral device. Said information, for example a URL or a network address, enables the software to connect to the peripheral device on which the associated data package is stored. Furthermore, the information stored on the data carrier comprises matching data to enable the software program to obtain the corresponding associated data package from storage device of the peripheral device. Furthermore, the associated data package is stored on a predefined location on the peripheral device, which is a location remote from the end user's computer.

The foregoing detailed description of the invention has been presented for purposes of illustration and description. It is not intended to be exhaustive or to limit the invention to the precise form disclosed, and obviously many modifications and variations are possible in light of the above teaching. The described embodiments were chosen in order to best explain the principles of the invention and its practical application to thereby enable others skilled in the art to best utilize the invention in various embodiments and with various modifications as are suited to the particular use contemplated. It is intended that the scope of the invention be defined by the claims appended hereto.

## Claims

1. Method for installing a driver of a target device on an end user's computer, wherein a network couples the end user's computer and target device, the method comprising:
- receiving an install command by the target device supplied by an end user;
- generating an unique identification and an associated data package in response to said install command, wherein the data package comprises an identifier having a relation with the unique identification;
- recording by means of the target device the unique identification on a data carrier;
- storing the data package on a predefined location remote from the end user's computer;
- supplying the unique identification written on the data carrier to the end user's computer; and,
- installing a driver of the target device on the end user's computer in dependence on the unique identification on the data carrier and the identifier.

2. Method according to claim 1, wherein the installing action comprises matching the unique identification and the identifier.

3. Method according to claim 1, further comprising deleting the data package from the predefined location after installation of the driver on the end user's computer.

4. Method according to claim 1, further comprising generating an expiration code; and,
- inserting the expiration code in the data package,
wherein the action installing is performed in dependence on the expiration code.

5. Method according to claim 1, wherein the data carrier is a sheet of paper and the action of recording comprises printing the unique identification on the sheet of paper.

6. Method according to claim 1, wherein the data carrier is an electronic data carrier.

7. Method according to claim 1, wherein the target device is a printing device.

8. Peripheral device arranged for cooperation with an end user's computer, wherein a network couples the end user's computer and peripheral device, the peripheral device comprising:
- an input unit for entering an install command by the end user;
- a processor readable storage medium; and
- a processor in communication with said input device and said processor readable storage medium;
- an interface unit to enable the connection with the network;
- an output unit for recording data on a data carrier;
said processor readable storage medium storing program code to program said processor to initiate to perform in response to the install command a method comprising the following actions:
- generating an unique identification and an associated data package;
- storing the data package on a predefined location remote from the end user's computer, and
- instructing the output unit to record the unique identification on the data carrier.

9. Peripheral device according to claim 8, the method further comprising:
- generating an expiration code; and,
- inserting the expiration code in the data package.

10. Peripheral device according to claim 8, wherein the data carrier is a sheet of paper and the action of writing comprises printing the unique identification on the sheet of paper.

11. Peripheral device according to claim 8, wherein the data carrier is an electronic data carrier.

12. Peripheral device according to claim 8, wherein the peripheral device is arranged to perform a printing function.

13. Peripheral device arranged for cooperation with an end user's computer, wherein a network couples the end user's computer and peripheral device, the peripheral device comprising:
- an input unit for receiving an install command supplied by the end user;
- a generator unit for generating in response to the install command a unique identification and an associated data package;
- an output unit for recording the unique identification on a data carrier; and,
- an interface unit for storing the data package on a predefined location remote from the end user's computer.

14. Peripheral device according to claim 13, the peripheral device further comprising:
- a code generator for generating an expiration code; and,
- an inserting unit for inserting the expiration code in the data package.

15. A computer program comprising instructions that when loaded on a computer arrangement support to perform any one of the methods according to claims 1 - 7.

16. A processor readable medium carrying a computer program, when loaded on a computer arrangement support to perform any one of the methods according to claims 1 -7.
